# EUROPÄISCHE PATENTSCHRIFT

(11) **EP 2 664 724 B1**
(45) Veröffentlichungstag und Bekanntmachung des Hinweises auf die Patenterteilung: **14.10.2015**
(21) Anmeldenummer: 13002536.4
(22) Anmeldetag: 14.05.2013
(51) Int. Cl.: E04B 1/26, F16B 43/02, F16B 5/02

(54) **Verbindungsanordnung mit einem Zwischenelement**
Connection assembly with an intermediate element
Agencement de liaison doté d'un élément intermédiaire

(30) Priorität: 14.05.2012 DE 202012004845 U
(43) Veröffentlichungstag der Anmeldung: 20.11.2013
(73) Patentinhaber: Simpson Strong-Tie GmbH, 61231 Bad Neuheim (DE)
(72) Erfinder: Richter, Frank Harald, 35410 Hungen (DE)
(74) Vertreter: Philipp, Matthias

(56) Entgegenhaltungen:
- FR-A- 1 203 169

## Beschreibung

Die Erfindung betrifft eine Verbindungsanordnung mit den Merkmalen des Oberbegriffs des Anspruchs 1. Eine gattungsgemäßes Verbindungselement ist aus DE 102009037820 A1 bekannt.

Obwohl sich die bekannten Verbindungsanordnungen und hierbei verwendeten Zwischenelemente durchaus bewährt haben, treten bisweilen Probleme auf, wenn in bestimmten Anwendungsfällen das Zwischenelement nur geringfügig über eine Oberfläche des Metallstreifens vorstehen darf, da das Verbindungselement stets einen Kopf aufweisen muss, dessen Größe sich nicht unter eine gewisse Mindestgröße reduzieren lässt und der in einer derartigen Situation nur schwierig in einer versenkten Anordnung in dem Zwischenelement unterzubringen ist.

Eine weitere Schwierigkeit besteht bei dem bekannten Zwischenelement und den bekannten Verbindungsanordnungen darin, den an dem ersten Bauteil zu befestigenden Metallstreifen präzise zu positionieren, da zwar auf dem ersten Bauteil eine Markierung o.ä. angebracht werden kann, die jedoch nach Auflegen des Metallstreifens und des Zwischenelements nicht mehr oder kaum noch sichtbar ist und außerdem beim Anschrauben des Zwischenelements eine beachtliche Verzugswirkung eintritt.

Zur Lösung dieser Schwierigkeiten schlägt die Erfindung eine Verbindungsanordnung gemäß Anspruch 1.

Der Kopf kann vollständig unter der Befestigungsoberfläche versenkt angeordnet sein.

Es kann vorgesehen sein, dass der Eingriffsansatz eine zylindrische, ovale oder mehreckige Querschnittsform aufweist, beispielsweise quadratisch, rechteckig oder sechseckig.

Der sich in die Aufnahmeöffnung erstreckende Endabschnitt des Eingriffsansatzes kann eine andere Querschnittsform als der übrige Teil des Eingriffsansatzes, der sich lediglich durch den Metallstreifen erstreckt, aufweisen. Beispielsweise kann der Endabschnitt zylindrisch sein, während der übrige Teil des Eingriffsansatzes oval oder mehreckig ist, beispielsweise um eine bestimmte Ausrichtung des Zwischenelements relativ zu dem Metallstreifen zu erleichtern oder zu erzwingen. Auch kann der Endabschnitt, bei zylindrischer Form, einen kleineren Durchmesser haben als der bevorzugt ebenfalls zylindrische übrige Teil des Eingriffsansatzes, und kann koaxial mit diesem verlaufen, oder auch mit versetzten Achsen.

Es kann vorgesehen sein, dass der Durchgang teilweise oder ganz an einer Unterseite des Eingriffsabschnitts mündet.

In einer anderen Ausführungsform kann vorgesehen sein, dass der Durchgang teilweise oder ganz an einer äußeren Umfangsfläche des Eingriffsabschnitts mündet.

Die äußere Umfangsfläche des Eingriffsansatzes ist senkrecht zu der Auflagefläche angeordnet.

Der Eingriffsansatz kann eine ebene Unterseite aufweisen, die parallel zu der Auflagefläche sein kann.

Das erste Bauteil kann aus mehreren Einzelbauteilen bestehen, die übereinander angeordnet sind, beispielsweise ein Holzträger und eine darüber angeordnete und daran zu befestigende öder befestigte, etwa aufgeschraubte oder aufgenagelte, Platte wie etwa Spanplatte, Sperrholzplatte oder Dämmplatte. Die Aufnahmeöffnung kann ausschließlich in einem obersten, dem Metallstreifen benachbarten Einzelbauteil ausgebildet sein.

Die Befestigungsöffnung kann gleich groß wie die Aufnahmeöffnung sein bzw. einen gleichen Durchmesser haben, und sie kann mit dieser koaxial angeordnet sein bzw. fluchten. Alternativ kann die Aufnahmeöffnung kleiner sein als die Befestigungsöffnung, bzw. einen kleineren Durchmesser haben.

In dem Zwischenelement kann mindestens ein weiterer Durchgang für ein weiteres Verbindungselement ausgebildet sein, wobei eine Achse des mindestens einen weiteren Durchgangs schräg zu der Auflagefläche verläuft. Insbesondere kann vorgesehen sein, dass zwei Durchgänge einander gegenüberliegend angeordnet sind, insbesondere unter gleichen Winkeln ihrer Achsen zur Auflagefläche.

Zweckmäßigerweise verläuft die Achse eines jeden Durchgangs in einer Ebene, die eine Längsachse des Eingriffsansatzes enthält, oder schneidet die Längsachse.

Weiter kann vorgesehen sein, dass Achsen mehrerer Durchgänge unter gleichen Winkeln zu einer Längsachse des Eingriffsansatzes angeordnet sind.

Die Erfindung wird nachfolgend anhand von Ausführungsbeispielen beschrieben, wobei auf eine Zeichnung Bezug genommen ist, in der
Fig. 1 eine senkrechte Schnittansicht einer ersten Ausführungsform einer Verbindungsanordnung zeigt,
Fig. 2 eine Draufsicht auf ein Zwischenelement der Verbindungsanordnung nach Fig. 1 zeigt,
Fig. 3 eine senkrechte Schnittansicht einer zweiten Ausführungsform einer Verbindungsanordnung zeigt,
Fig. 4 perspektivische Ansichten eines Zwischenelements und der Verbindungsanordnung nach Fig. 3 zeigt,
Fig. 5 eine senkrechte Schnittansicht einer dritten Ausführungsform einer Verbindungsanordnung zeigt,
Fig. 6 eine Draufsicht auf einen Metallstreifen der Verbindungsanordnung nach Fig. 5 zeigt,
Fig. 7 eine senkrechte Schnittansicht einer vierten Ausführungsform einer Verbindungsanordnung zeigt, und
Fig. 8 eine Draufsicht auf ein Zwischenelement der Verbindungsanordnung nach Fig. 7 zeigt.

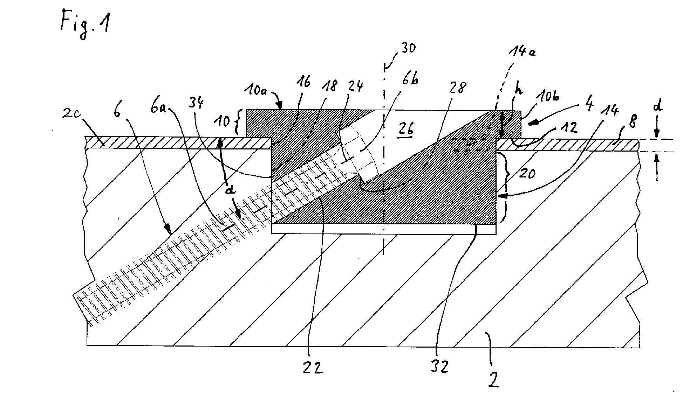

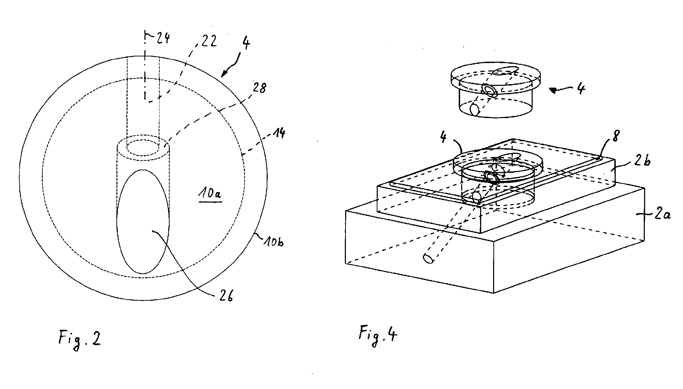

Eine erste Ausführungsform der Erfindung zeigen Fig. 1 und 2. Die dargestellte Verbindunganordnung umfasst ein erstes Bauteil 2, insbesondere einen Holzbalken oder eine Holzplatte, dessen Oberseite eine Befestigungsoberfläche 2c bildet und an dem mittels eines Zwischenelements 4 und eines Verbindungselements 6 ein an der Befestigungsoberfläche 2c anliegender Metallstreifen 8 befestigt ist. Alternativ könnte das erste Bauteil 2 aus einem anderen Material als Holz bestehen, beispielsweise aus einer Stein- oder Betonwand.

Das Zwischenelement 4 besteht aus einem harten, zähen Material, vorzugsweise Metall oder Kunststoff, der glasfaser- oder kohlefaserverstärkt sein kann. Das Zwischenelement 4 weist einen Auflageabschnitt 10 auf, an dessen Unterseite sich eine ebene, auf dem Metallstreifen 8 aufliegende Auflagefläche 12 befindet, sowie einen Eingriffsansatz 14, der in eine in dem Metallstreifen 8 eingebrachte Befestigungsöffnung 16 eingesetzt ist. In dem dargestellten Ausführungsbeispiel sind sowohl die Befestigungsöffnung 16 als auch der Eingriffsansatz 14 zylindrisch und weisen einen im Wesentlichen identischen Durchmesser auf, so dass der Eingriffsansatz 14 praktisch spielfrei in die Befestigungsöffnung 16 greift.

Weiterhin ist in dem ersten Bauteil 2 eine Aufnahmeöffnung 18 ausgebildet, die in dem dargestellten Ausführungsbeispiel zylindrisch ist, mit der Befestigungsöffnung 16 in dem Metallstreifen 8 fluchtet und einen gleichen Durchmesser wie diese aufweist. Der Eingriffsansatz 14 erstreckt sich ersichtlich nicht nur mit einem dem Auflageabschnitt 10 benachbarten Bereich 14a in die Befestigungsöffnung 16, sondern weiter mit einem Endabschnitt 20 bis in die Aufnahmeöffnung 18, wobei der Endabschnitt 20 in dem dargestellten Beispiel zylindrisch ist und einen gleichen Durchmesser wie der übrige Teil des Eingriffsabschnitts 14 aufweist.

Um eine geringe Höhe h des Auflageabschnitts 10 zu erzielen, mit der das Zwischenelement 4 über den Metallstreifen 8 nach oben vorsteht, ist ein Kopf 6b des Verbindungselements 6 bis in den Eingriffsansatz 14 und in dessen Endabschnitt 20 hinein versenkt angeordnet. In dem Zwischenelement 4 ist ein Durchgang 22 gebildet, dessen Achse 24 schräg zu der Auflagefläche 12 verläuft und durch den sich ein Schaft 6a des Verbindungselements 6 erstreckt, sowie ein Aufnahmeraum 26, in dem sich der Kopf 6b des Verbindungselements 6 befindet. An einem oberseitigen Ende des Durchgangs 22 ist eine ebene Anlagefläche 28 ausgebildet, gegen die der Kopf 6b anliegt. Sowohl der Durchgang 22 als auch der Aufnahmeraum 26 sind vorzugsweise zylindrisch bezüglich der Achse 24 ausgebildet.

Der Eingriffsansatz 14 besteht somit aus einem dem Auflageabschnitt benachbarten Bereich 14a, der sich in die Befestigungsöffnung 16 erstreckt und eine Höhe d besitzt, die mit einer Dicke d des Metallstreifens 8 übereinstimmt, und aus dem Endabschnitt 20, der an den Bereich 14a anschließt und in der Aufnahmeöffnung 18 aufgenommen ist.

Die Achse 24 erstreckt sich unter einem Winkel α bezüglich der Auflagefläche 12, der zwischen 10° und 80° liegen kann und bevorzugt im Bereich von 30° bis 60° liegt. Die Achse 24 verläuft in einer Draufsicht in Richtung einer Längsachse 30 des Zwischenelements, wobei diese Ansicht in Fig. 2 dargestellt ist, vorzugsweise radial bezüglich des Eingriffsabschnitts 14, oder anders ausgedrückt liegt sie in einer Ebene, die auch die Längsachse 30 des Zwischenelements 4 enthält.

Aufgrund der stark versenkten Anordnung des Kopfs 6b des Verbindungselements 6 liegt dieser unterhalb einer Oberseite 10a des Auflageabschnitts 10, was zu einer geringen Höhe h beiträgt, und zumindest teilweise unterhalb der Befestigungsoberfläche 2c.

Im Rahmen der Erfindung kann vorgesehen sein, dass der Durchgang 22 aus dem Eingriffsansatz 14 ganz oder teilweise an einer Unterseite 32 des Eingriffsansatzes 14 bzw. des Endabschnitts 20 mündet, oder aber dass der Durchgang 22, wie in Fig. 1 dargestellt ist, ganz im Bereich einer äußeren Umfangsfläche 34 des Eingriffsansatzes 14 bzw. des Endabschnitts 20 mündet. Im letztgenannten Fall kann vorgesehen sein, dass der Durchgang 22 vollständig an der Umfangsfläche 34 im Bereich des Endabschnitts 20 mündet, wobei dieser Fall in Fig. 1 dargestellt ist, oder teilweise im Bereich des Endabschnitts 20 und teilweise im Bereich des übrigen (oberen) Teils des Eingriffsansatzes 14, oder ganz im Bereich des übrigen Teils des Eingriffsansatzes 14, der sich oberhalb des Endabschnitts 20 befindet.

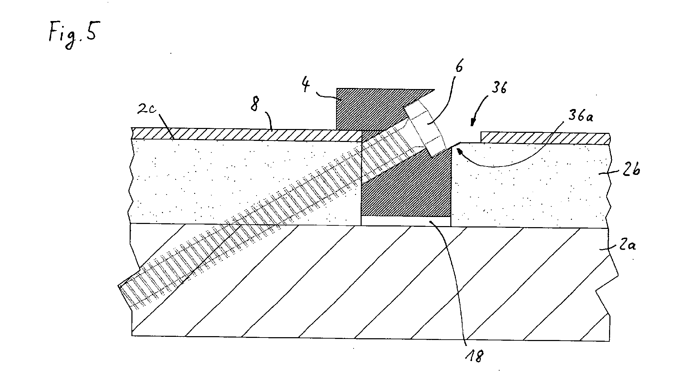

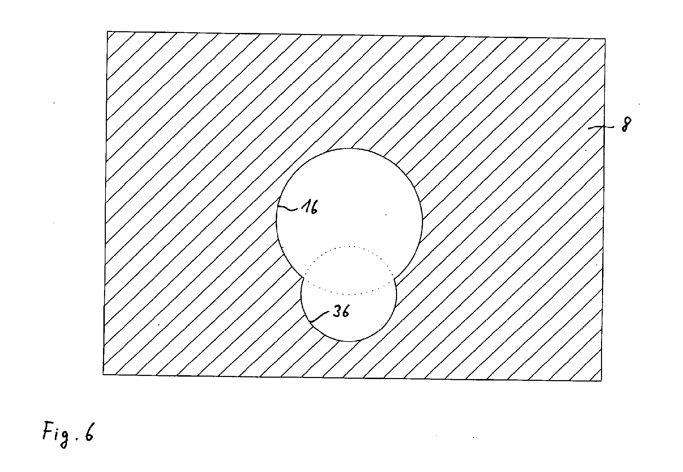

Der Aufnahmeraum 26 kann vollständig im Bereich der Oberseite 10a des Auflageabschnitts 10 münden, wie in Fig. 1 dargestellt, oder aber wenigstens teilweise im Bereich einer äußeren Umfangsfläche 10b des Auflageabschnitts 10, wobei dieser Fall in dem Ausführungsbeispiel nach in Fig. 5 und 6 dargestellt ist.

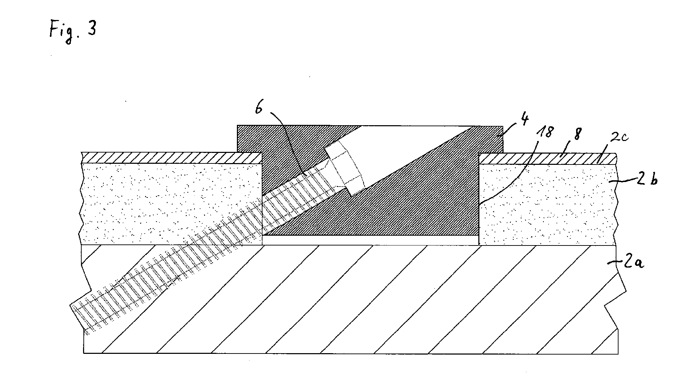

Fig. 3 und 4 erläutern eine Ausführungsform, bei der das erste Bauteil 2 aus mehreren, in diesem Fall aus zwei, Einzelbauteilen 2a, 2b zusammengesetzt ist. Das erste Einzelbauteil 2a besteht aus einem tragenden Balken, während das zweite Einzelbauteil 2b mit Befestigungsoberfläche 2c eine darauf befestigte Platte ist, wie beispielsweise eine Span- oder Dämmplatte. Die Aufnahmeöffnung 18 erstreckt sich in diesem Fall lediglich in dem zweiten oder durch das zweite Einzelbauteil 2b, der Platte, während der Balken 2a davon unberührt ist. Alternativ könnte vorgesehen sein, dass sich die Aufnahmeöffnung 18, beispielsweise im Falle einer relativ dünnen Platte 2b, bis in das erste Einzelbauteil 2a hineinerstreckt, oder es könnte umgehend vorgesehen sein, dass sich die Aufnahmeöffnung 18 als Sacköffnung lediglich über einen Teil der Dicke des zweiten Einzelbauteils 2b erstreckt. Fig. 4 zeigt in perspektivischen Phantomansichten die in Fig. 3 im Schnitt dargestellte Anordnung.

Fig. 5 und 6 zeigen eine Verbindungsanordnung, bei der das erste Bauteil 2 so wie bei der zuvor erläuterten Ausführung nach Fig. 3 und 4 aus zwei Einzelbauteilen 2a, 2b zusammengesetzt ist, und bei der der Aufnahmeraum 26 nicht nur das Zwischenelement 4, sondern auch einen Teil des Metallstreifens 8 durchsetzt. Während Fig. 5 die Ausbildung des Zwischenelements 4 zeigt, erläutert Fig. 6 eine mögliche Form einer Aussparung 36 in dem Metallstreifen 8. Die Aussparung 36 ist in der Draufsicht nach Fig. 4 kreisrund und schließt sich unmittelbar an die Befestigungsöffnung 16 an. Je nach Neigung (Winkel α) der Achse 24 des Durchgangs 22 in Bezug auf die Auflagefläche 12, und je nachdem wie tief der Kopf 6b des Verbindungselements 6 in Bezug auf die Oberseite 10a des Auflageabschnitts 10 versenkt angeordnet ist, kann auch eine an die Aussparung 36 anschließende Aussparung 36a an dem ersten Bauteil 2 erforderlich sein, wie in Fig. 5 angedeutet ist.

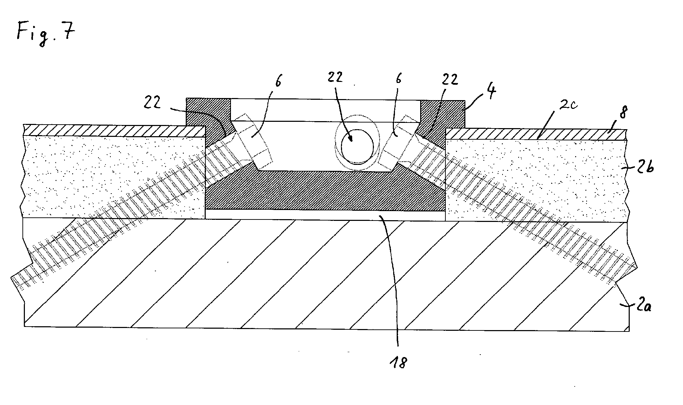

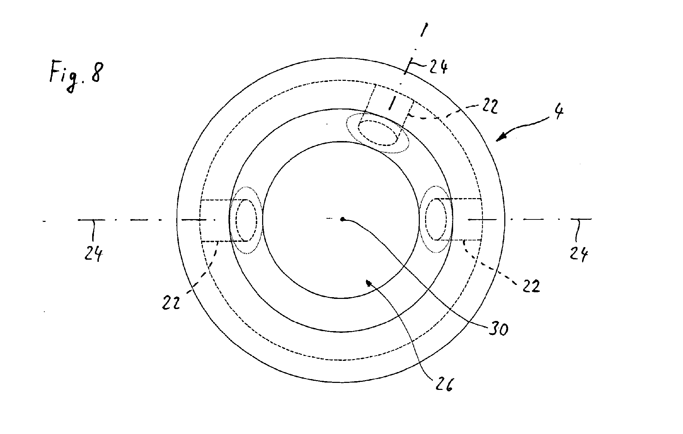

Fig. 7 und 8 erläutern eine Ausführungsform, bei der mehrere, in diesem Beispiel drei, Verbindungselemente 6 vorgesehen sind. Die Verbindungselemente 6 erstrecken sich durch drei Durchgänge 22, deren Achsen 24 in dem dargestellten Beispiel unter gleichen Winkeln α bezüglich der Anlagefläche 12 geneigt angeordnet sind. Die Durchgänge 22 münden oberseitig in einen einzigen, mittig in dem Zwischenelement ausgebildeten und nach oben offenen Aufnahmeraum 26, wobei an den Übergängen zwischen Durchgängen 22 und Aufnahmeraum 26 ebene Stirnflächen 28 für die Köpfe 6b der Verbindungselemente 6 ausgebildet sind. Das Zwischenelement kann als Drehteil hergestellt sein, mit nachträglich eingebohrten oder - gefrästen Durchgängen und Stirnflächen.

Wie Fig. 8 zeigt, sind zwei Verbindungselemente 6 einander gegenüberliegend angeordnet, oder anders ausgedrückt in einem Umfangswinkelabstand von 180° bezüglich einer Längsachse 30 des Zwischenelements 4, während ein drittes Verbindungselement 6 in einem auf eine bestimmte Befestigungssituation angepassten Umfangswinkelabstand zu den beiden anderen angeordnet ist.

Ersichtlich könnten bei einer derartigen Verbindungsanordnung lediglich zwei Verbindungselemente 6 mit anderem Umfangswinkelabstand als 180° vorgesehen sein, oder mehr als drei Verbindungselemente, wobei nicht nur deren gegenseitiger Umfangswinkelabstand bezüglich der Längsachse 30 angepasst an einen jeweiligen Einsatzfall vorgebbar ist, sondern auch der Winkel α der Achse 24 jedes einzelnen Durchgangs 22 in Bezug auf die Auflagefläche 12.

### Bezugszeichenliste

- 2: erstes Bauteil
- 2a: erstes Einzelbauteil
- 2b: zweites Einzelbauteil
- 2c: Befestigungsoberfläche (von 2)
- 4: Zwischenelement
- 6: Verbindungselement
- 6a: Schaft
- 6b: Kopf
- 8: Metallstreifen
- 10: Auflageabschnitt
- 10a: Oberseite
- 10b: Umfangsfläche
- 12: Auflagefläche
- 14: Eingriffsansatz
- 14a: Bereich benachbart zu 10
- 16: Befestigungsöffnung
- 18: Aufnahmeöffnung
- 20: Endabschnitt
- 22: Durchgang
- 24: Achse
- 26: Aufnahmeraum
- 28: Anlagefläche
- 30: Längsachse
- 32: Unterseite (von 14)
- 34: Umfangsfläche (von 14)
- 36: Aussparung (in 8)
- 36a: Aussparung (in 2)

- α: Winkel von 24 gegenüber 12
- h: Höhe von 10
- d: Dicke von 8; Höhe von 14a

## Patentansprüche

1. Verbindungsanordnung, mit:
- einem ersten Bauteil (2), insbesondere aus Holz, mit einer Befestigungsoberfläche (2c),
- einem mit seiner Unterseite zur flächigen Anlage an der Befestigungsoberfläche (2c) ausgebildeten Metallstreifen (8), der mit einer Befestigungsöffnung (16) versehen ist,
- einem mittels eines Verbindungselements (6) an dem ersten Bauteil (2) befestigten Zwischenelement (4), das eine auf einer Oberfläche des Metallstreifens (8) an einem Befestigungsöffnungsrand aufliegende Auflagefläche (12), einen gegenüber der Auflagefläche (12) vorstehenden, in die Befestigungsöffnung (16) eingreifenden Eingriffsansatz (14) und einen Durchgang (22) für ein Verbindungselement (6) aufweist, der durch den Eingriffsansatz (14) verläuft und dessen Achse (24) schräg gegenüber der Auflagefläche (12) verläuft, wobei der Durchgang (22) an einem oberseitigen Ende eine ebene oder kegelförmig angesenkte Anlagefläche (28) für einen Kopf (6b) des Verbindungselements (6) aufweist, wobei die äußere Umfangsfläche (24) des Eingriffsansatzes (14) senkrecht zu der Auflagefläche (12) angeordnet sind,
**dadurch gekennzeichnet, dass** in dem ersten Bauteil (2) eine Aufnahmeöffnung (18) ausgebildet ist und dass der Kopf (6b) des Verbindungselements (6) wenigstens teilweise unter der Befestigungsoberfläche (2c) versenkt in dem Zwischenelement (4) in einem Endabschnitt (20) des Eingriffsansatzes (14) angeordnet ist, der sich bis in eine in dem ersten Bauteil (2) ausgebildete Aufnahmeöffnung (18) erstreckt.

2. Verbindungsanordnung nach Anspruch 1, **dadurch gekennzeichnet, dass** der Kopf (6b) vollständig unter der Befestigungsoberfläche (2c) versenkt angeordnet ist.

3. Verbindungsanordnung nach Anspruch 1 oder 2, **dadurch gekennzeichnet, dass** der Eingriffsansatz (14) eine zylindrische, ovale oder mehreckige Querschnittsform aufweist.

4. Verbindungsanordnung nach Anspruch 1, 2 oder 3, **dadurch gekennzeichnet, dass** der sich in die Aufnahmeöffnung (18) erstreckende Endabschnitt (20) des Eingriffsansatzes (14) eine andere Querschnittsform als der übrige Teil des Eingriffsansatzes (14).

5. Verbindungsanordnung nach einem der vorangehenden Ansprüche, **dadurch gekennzeichnet, dass** der Durchgang (22) teilweise oder ganz an einer Unterseite (32) des Eingriffsansatzes (14) mündet.

6. Verbindungsanordnung nach einem der Ansprüche 1 bis 4, **dadurch gekennzeichnet, dass** der Durchgang (22) teilweise oder ganz an einer äußeren Umfangsfläche (34) des Eingriffsansatzes (14) mündet.

7. Verbindungsanordnung nach einem der vorangehenden Ansprüche, **dadurch gekennzeichnet, dass** der Eingriffsansatz (14) eine ebene Unterseite (32) aufweist, die parallel zu der Auflagefläche (12) sein kann.

8. Verbindungsanordnung nach einem der vorangehenden Ansprüche, **dadurch gekennzeichnet, dass** das erste Bauteil (2) aus mehreren Einzelbauteilen (2a, 2b) besteht, die übereinander angeordnet sind.

9. Verbindungsanordnung nach Anspruch 8, **dadurch gekennzeichnet, dass** die Befestigungsöffnung (16) mit der Aufnahmeöffnung (18) fluchtet und gleich groß ist wie diese.

10. Verbindungsanordnung nach einem der vorangehenden Ansprüche, **dadurch gekennzeichnet, dass** in dem Zwischenelement (4) mindestens ein weiterer Durchgang (22) für mindestens ein weiteres Verbindungselement (6) ausgebildet ist, wobei eine Achse (24) des weiteren Durchgangs (22) schräg zu der Auflagefläche (12) verläuft.

11. Verbindungsanordnung nach Anspruch 10, **dadurch gekennzeichnet, dass** zwei Durchgänge (22) einander gegenüberliegend angeordnet sind.

12. Verbindungsanordnung nach Anspruch 10 oder 11, **dadurch gekennzeichnet, dass** Achsen (24) mehrerer Durchgänge (22) unter gleichen Winkeln (α) zu der Auflagefläche (12) des Eingriffsansatzes (14) angeordnet sind.

## Claims

1. A joining assembly comprising:
- a first component (2), especially made of wood, with an attachment surface (2c),
- a metal strip (8) which is configured with its underside to abut said attachment surface (2c) in a planar fashion and which is provided with a fastening hole (16),
- an intermediate element (4) fastened to said first component (2) by means of a connector member (6), said intermediate element (4) comprising a bearing surface (12) resting on a surface of said metal strip (8) at the rim of a fastening hole, an engaging lug (14) projecting opposite said bearing surface (12) and engaging in said fastening hole (16), and a passage (22) for a connector member (6) which runs through said engaging lug (14) and the axis of which (24) runs obliquely with respect to said bearing surface (12), said passage (22) having a flat or conically countersunk abutment surface (28) at an upper-side end for a head (6b) of said connector member (6),
wherein the outer circumferential surface (34) of said engaging lug (14) is disposed perpendicularly to said bearing surface (12),
**characterised in that** a fitting aperture (18) is formed in said first component (2) and said head (6b) of said connector member (6) is disposed at least partially sunk beneath said attachment surface (2c) in said intermediate element (4) in an end portion (20) of said engaging lug (14), which extends as far as a fitting aperture (18) formed in said first component (2).

2. The joining assembly as claimed in claim 1, **characterised in that** the head (6b) is disposed completely sunk beneath the attachment surface (2c).

3. The joining assembly as claimed in either of claims 1 or 2, **characterised in that** the engaging lug (14) is cylindrical, oval or polygonal in cross-sectional shape.

4. The joining assembly as claimed in any of claims 1, 2 or 3, **characterised in that** the end portion (20) of the engaging lug (14) extending into the fitting aperture (18) is of a different cross-sectional shape from the remaining part of the engaging lug (14).

5. The joining assembly as claimed in any of the preceding claims, **characterised in that** the passage (22) ends partially or completely at an underside (32) of the engaging lug (14).

6. The joining assembly as claimed in any of claims 1 to 4, **characterised in that** the passage (22) ends partially or completely at an outer circumferential surface (34) of the engaging lug (14).

7. The joining assembly as claimed in any of the preceding claims, **characterised in that** the engaging lug (14) has a flat underside (32), which may be parallel to the bearing surface (12).

8. The joining assembly as claimed in any of the preceding claims, **characterised in that** the first component (2) consists of a plurality of individual components (2a, 2b) which are disposed on top of one another.

9. The joining assembly as claimed in claim 8, **characterised in that** the fastening hole (16) is aligned with the fitting aperture (18) and is the same size as the latter.

10. The joining assembly as claimed in any of the preceding claims, **characterised in that** at least one further passage (22) for at least one further connector member (6) is formed in the intermediate element (4), wherein an axis (24) of said further passage (22) runs obliquely with respect to the bearing surface (12)

11. The joining assembly as claimed in claim 10, **characterised in that** two passages (22) are disposed opposite one another.

12. The joining assembly as claimed in either of claims 10 or 11, **characterised in that** axes (24) of a plurality of passages (22) are disposed at the same angles (a) to the bearing surface (12) of the engaging lug (14).

## Revendications

1. Dispositif de raccordement, avec :
- un premier composant (2), en particulier en bois, avec une surface de fixation (2c),
- une bande métallique (8) qui est pourvue d'une ouverture de fixation (16), formée à la surface de fixation (2c) avec sa face inférieure orientée vers la surface de pose,
- un élément intermédiaire (4) fixé au premier composant (2) au moyen d'un élément de raccordement (6), qui présente sur une surface de la bande métallique (8) une surface d'appui (12) en saillie au niveau d'un bord d'ouverture de fixation, un épaulement d'engagement (14) en prise dans l'ouverture de fixation (1.6) devant la surface d'appui opposée (12) ainsi qu'un passage (22) pour un élément de raccordement (6), lequel s'étend à travers l'épaulement d'engagement (14) et son axe (24) oblique par rapport à la surface d'appui (12), le passage (22) présentant au niveau d'une extrémité supérieure une surface de pose plane ou conique fraisée (28) pour une tête (6b) de l'élément de raccordement (6),
la surface périphérique extérieure (24) de l'épaulement d'engagement (14) est disposée verticalement par rapport à la surface d'appui (12),
**caractérisé en ce qu'**une ouverture de réception (18) est formée dans le premier composant (2) et la tête (6b) de l'élément de raccordement (6) est au moins disposé de façon partiellement encastrée au dessous de la surface de fixation (2c) dans l'élément intermédiaire (4) dans une section d'extrémité (20) de l'épaulement d'engagement (14), qui s'étend jusque dans une ouverture de réception (18) formée au niveau du premier composant (2).

2. Dispositif de raccordement selon la revendication 1, **caractérisé en ce que** la tête (6b) est entièrement disposée de manière encastrée sous la surface de fixation (2c).

3. Dispositif de raccordement selon les revendications 1 ou 2, **caractérisé en ce que** l'épaulement d'engagement (14) présente une forme de section polygonale cylindrique, ovale ou polygonale.

4. Dispositif de raccordement selon les revendications 1, 2 ou 3, **caractérisé en ce que** la section d'extrémité (20) de l'épaulement d'engagement (14) s'étendant dans l'ouverture de réception (18) présente une forme de section différente que celle de l'autre partie de l'épaulement d'engagement (14).

5. Dispositif de raccordement selon l'une des revendications précédentes, **caractérisé en ce que** le passage (22) débouche en partie ou complètement au niveau d'une partie inférieure (32) de l'épaulement d'engagement (14).

6. Dispositif de raccordement selon les revendications 1 à 4, **caractérisé en ce que** le passage (22) débouche en partie ou complètement au niveau d'une surface périphérique (34) de l'épaulement d'engagement (14).

7. Dispositif de raccordement selon l'une des revendications précédentes, **caractérisé en ce que** l'épaulement d'engagement (14) présente une partie inférieure (32) plane pouvant être parallèle à la surface d'appui (12).

8. Dispositif de raccordement selon l'une des revendications précédentes, **caractérisé en ce que** le premier composant (2) se compose de plusieurs composants individuels (2a, 2b) qui sont ordonnés de façon superposée.

9. Dispositif de raccordement selon la revendication 8, **caractérisé en ce que** l'ouverture de fixation (16) est alignée avec l'ouverture de réception (18) et qu'elle a une taille identique à celle-ci :

10. Dispositif de raccordement selon l'une des revendications précédentes, **caractérisé en ce que** dans l'élément intermédiaire (4), au moins un passage supplémentaire (22) est formé pour au moins un élément de raccordement additionnel (6), l'axe (24) du passage supplémentaire (22) s'étendant obliquement par rapport à la surface d'appui (12).

11. Dispositif de raccordement selon la revendication 10, **caractérisé en ce que** deux passages (22) sont ordonnés de façon opposée.

12. Dispositif de raccordement selon les revendications 10 ou 11, **caractérisé en ce que** les axes (24) de plusieurs passages (22) sont ordonnés avec le même angle (a) par rapport à la surface d'appui (12) de l'épaulement d'engagement (14).
